Europäisches Patentamt

European Patent Office

Office européen des brevets

(19)

(11) **EP 0 925 256 B1**

(12) **EUROPÄISCHE PATENTSCHRIFT**

(45) Veröffentlichungstag und Bekanntmachung des Hinweises auf die Patenterteilung:
**03.05.2000  Patentblatt 2000/18**

(21) Anmeldenummer: **97927144.2**

(22) Anmeldetag: **06.06.1997**

(51) Int Cl.7: **C01B 33/159**, C01B 33/16

(86) Internationale Anmeldenummer:
**PCT/EP97/02932**

(87) Internationale Veröffentlichungsnummer:
**WO 97/48642 (24.12.1997 Gazette 1997/55)**

(54) **VERFAHREN ZUR HERSTELLUNG VON ORGANISCH MODIFIZIERTEN AEROGELEN**

PROCESS FOR PRODUCING ORGANICALLY MODIFIED AEROGELS

PROCEDE DE PRODUCTION D'AEROGELS MODIFIES DE MANIERE ORGANIQUE

(84) Benannte Vertragsstaaten:
**CH DE ES FR GB IT LI NL SE**

(30) Priorität: **17.06.1996  DE 19624066**

(43) Veröffentlichungstag der Anmeldung:
**30.06.1999  Patentblatt 1999/26**

(73) Patentinhaber: **CABOT CORPORATION
Boston, MA 02109 (US)**

(72) Erfinder: **SCHWERTFEGER, Fritz
D-60529 Frankfurt am Main (DE)**

(74) Vertreter: **Luderschmidt, Schüler & Partner GbR
Patentanwälte,
John-F.-Kennedy-Strasse 4
65189 Wiesbaden (DE)**

(56) Entgegenhaltungen:
**WO-A-96/22942          WO-A-97/03017**

**Beschreibung**

Die Erfindung betrifft ein Verfahren zur Herstellung von organisch modifizierten $SiO_2$-Aerogelen.

Aerogele, insbesondere solche mit Porositäten über 60 % und Dichten unter 0,6 g/cm³, weisen eine äußerst geringe thermische Leitfähigkeit auf und finden deshalb Anwendung als Wärmeisolationsmaterial, wie z.B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel. Es ist anzumerken, daß es sich bei den erfindungsgemäßen Gelen um Aerogele, im Sinne von Gel mit Luft als Dispersionsmittel handelt.

$SiO_2$-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d.h. es tritt auch kein Schrumpfen des Gels während der Trocknung auf. Auf dieser Trocknungstechnik basierende Herstellungsverfahren sind z. B. aus der EP-A-0 396 076 oder der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen $CO_2$ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von $SiO_2$-Gelen, bei dem diese vor der Trocknung mit einem chlorhaltigen Silylierungsmittel umgesetzt werden. Das $SiO_2$-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane ($Me_{4-n}SiCl_n$ mit n = 1 bis 3) eingesetzt. Das dabei entstehende, auf der Oberfläche mit Methylsilylgruppen modifizierte $SiO_2$-Gel kann anschließend aus einem organischen Lösungsmittel heraus an der Luft getrocknet werden. Damit können Aerogele mit Dichten unter 0,4 g/cm³ und Porositäten über 60 % erreicht werden.

Das auf dieser Trocknungstechnik basierende Herstellungsverfahren wird ausführlich in der WO 94/25149 beschrieben.

Die oben beschriebenen Gele können darüber hinaus vor der Trocknung in der alkohol-wäßrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar.

Eine erhebliche Kostensenkung kann durch die Verwendung von Wasserglas als Ausgangsmaterial für die Herstellung von $SiO_2$-Gelen erreicht werden. Dazu kann beispielsweise aus einer wäßrigen Wasserglaslösung mit Hilfe eines Ionenaustauscherharzes eine Kieselsäure hergestellt werden, die durch Zugabe einer Base zu einem $SiO_2$-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane ($Me_{4-n}SiCl_n$ mit n = 1 bis 3) eingesetzt. Das dabei entstehende, auf der Oberfläche mit Methylsilylgruppen modifizierte $SiO_2$-Gel kann anschließend ebenfalls aus einem organischen Lösungsmittel heraus an der Luft getrocknet werden. Das auf dieser Technik basierende Herstellungsverfahren wird z.B. in der DE-A-43 42 548 offenbart.

Bei der Silylierung mittels chlorhaltiger Silylierungsmittel fallen zwangsläufig in sehr großen Mengen Hydrogenchlorid (HCl) sowie eine Vielzahl damit verbundener Nebenprodukte an, die gegebenenfalls eine sehr aufwendige und kostenintensive Reinigung der silylierten $SiO_2$-Gele durch mehrmaliges Waschen mit einem geeigneten organischen Lösungsmittel erfordern.

In der DE-C 19502453 wird die Verwendung eines chlorfreien Silylierungsmittels beschrieben. Dazu wird beispielsweise ein nach den oben beschriebenen Verfahren hergestelltes, silikatisches Lyogel vorgelegt und mit einem chlorfreien Silylierungsmittel umgesetzt. Als Silylierungsmittel werden dabei vorzugsweise Methylisopropenoxysilane ($Me_{4-n}Si(OC(CH_3)CH_2)_n$ mit n = 1 bis 3) eingesetzt. Das dabei entstehende, auf der Oberfläche mit Methylsilylgruppen modifizierte $SiO_2$-

Gel kann anschließend ebenfalls aus einem organischen Lösungsmittel heraus an der Luft getrocknet werden.

Durch die Verwendung der chlorfreien Silylierungsmittel wird zwar das Problem der Bildung von HCl gelöst, jedoch stellen die verwendeten, chlorfreien Silylierungsmittel einen sehr hohen Kostenfaktor dar.

In der WO 95/06617 werden Verfahren zur Herstellung von Kieselsäure-Aerogelen mit hydrophoben Oberflächengruppen offenbart.

In der WO 95/06617 werden die Kieselsäure-Aerogele durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wäßrigen Lösungen anorganischer Basen, wobei der pH-Wert des Hydrogels im Bereich von 7,5 bis 11 gehalten wird, Verdrängung der in dem Hydrogel enthaltenen wäßrigen Phase durch einen Alkohol und anschließende überkritische Trocknung des erhaltenen Alkogels, erhalten.

Bei beiden Verfahren führt jedoch der Verzicht auf chlorhaltige Silylierungsmittel nur zu einem Aerogel mit über Sauerstoff gebundenen hydrophoben Oberflächengruppen. Diese sind in einer wasserhaltigen Atmosphäre recht leicht wieder abspaltbar. Dadurch ist das beschriebene Aerogel nur kurzfristig hydrophob. Daher ist, um dauerhaft hydrophobe Aerogele zu erhalten, auf die Verwendung von weiter oben beschriebenen Silylierungsmitteln nicht zu verzichten.

Aufgabe der vorliegenden Erfindung war es daher, ein Verfahren zur Herstellung von dauerhaft hydrophoben Aerogelen bereitzustellen, bei dem gängige Silylierungsmittel verwendet werden können, aber trotzdem deutlich weniger Nebenprodukte auftreten als bei den aus dem Stand der Technik bekannten Verfahren.

Eine weitere Aufgabe der vorliegenden Erfindung war es, den Aufwand, der sich aus der destillativen Trennung von Lösungsmittel/$H_2O$-Gemischen ergibt, zu reduzieren.

Diese Aufgaben werden gelöst durch ein Verfahren zur Herstellung von Aerogelen mit dauerhaft hydrophoben Oberflächengruppen, bei dem man

a) ein silikatisches Lyogel vorlegt,
b) das in Schritt a) vorgelegte Gel mit einem organischen Lösungsmittel wäscht,
c) das in Schritt b) erhaltene Gel oberflächensilyliert, und
d) das in Schritt c) erhaltene oberflächensilylierte Gel trocknet,

dadurch gekennzeichnet, daß man in Schritt b) als organisches Lösungsmittel einen Diether der Formel I verwendet,

$$R^1\text{-}O\text{-}(CH_2)_n\text{-}O\text{-}R^2 \qquad (I)$$

wobei

$R^1$ und $R^2$ unabhängig voneinander, gleich oder verschieden, Alkylgruppen mit 1 - 4 C-Atomen sind und

n eine natürliche Zahl im Bereich von 1 bis 5 ist.

Die erfindungsgemäß verwendeten Diether haben gegenüber den aus dem Stand der Technik bekannten Lösungsmitteln den Vorteil, daß sie in Anwesenheit des in Schritt c) verwendeten Silylierungsmittels keine Reaktion zeigen und, daß sie mittels festem NaOH bei der Recyklierung von $H_2O$ getrennt werden können.

In einer bevorzugten Ausführungsform wird in Schritt a) ein silikatisches Lyogel vorgelegt, das durch Hydrolyse und Kondensation von Si-Alkoxiden in einem organischen Lösungsmittel mit Wasser erhältlich ist. Als Si-Alkoxid wird ein Tetraalkoxysilan, vorzugsweise Tetraethoxy- oder Tetramethoxysilan verwendet. Das organische Lösungsmittel ist dabei vorzugsweise ein Alkohol, besonders bevorzugt Ethanol oder Methanol, dem bis zu 20 Vol.-% Wasser zugesetzt sein können. Bei der Hydrolyse und Kondensation der Si-Alkoxide in einem organischen Lösungsmittel mit Wasser können in einem ein- oder zweistufigen Schritt als Katalysatoren Säuren und/oder Basen zugesetzt werden.

In einer besonders bevorzugten Ausführungsform wird in Schritt a) ein silikatisches Lyogel vorgelegt, das dadurch hergestellt wird, daß man eine wäßrige Wasserglaslösung mit Hilfe eines sauren Ionenaustauscherharzes, einer Mineralsäure oder einer salzsauren Lösung auf einen pH-Wert ≤ 3 bringt, die dabei entstandene Kieselsäure durch Zugabe einer Base zu einem $SiO_2$-Gel polykondensiert und, falls eine Mineralsäure benutzt wurde, das Gel mit Wasser im wesentlichen elektrolytfrei wäscht. Dabei wird im allgemeinen Natrium- und/oder Kaliumwasserglas verwendet. Als Ionenaustauscherharz wird vorzugsweise ein saures Harz verwendet, wobei vor allem solche geeignet sind, die Sulfonsäuregruppen enthalten. Falls man Mineralsäuren einsetzt, sind vor allem Salzsäure und Schwefelsäure geeignet. Falls man salzsaure Lösungen einsetzt, sind vor allem Aluminiumsalze geeignet, insbesondere Aluminiumsulfat und/oder -chlorid. Als Base wird im allgemeinen $NH_4OH$, NaOH, KOH, $Al(OH)_3$ und/oder kolloidale Kieselsäure eingesetzt. Falls man eine Mineralsäure verwendet, wird das mit Hilfe der Base erzeugte $SiO_2$-Gel mit Wasser im wesentlichen elektrolytfrei gewaschen. Vorzugsweise wird dabei solange gewaschen, bis das ablaufende Waschwasser dieselbe elektrische Leitfähigkeit aufweist wie entmineralisiertes Wasser. Vor dem Waschen läßt man das Gel vorzugsweise altern, und zwar im allgemeinen bei 20 bis 100°C, vorzugsweise bei 40 bis 100°C und insbesondere 80 bis 100°C, und bis zu einem pH-Wert von 4 bis 11, vorzugsweise 5 bis 9, und insbesondere 5 bis 8. Die Zeit dafür beträgt im allgemeinen 1 Sekunde bis 48 Stunden, vorzugsweise 1 Sekunde bis 24 Stunden und insbesondere 1 Sekunde bis 5 Stunden.

Das in Schritt a) vorzugsweise aus oben beschriebenen silikatischen Ausgangsverbindungen hergestellte Lyogel kann zusätzlich noch zur Kondensation befähigte Zirkonium-, Aluminium- und/oder Titan-Verbindungen enthalten.

Der Schritt a) wird im allgemeinen bei einer Temperatur zwischen dem Gefrierpunkt der Lösung und 70°C durchgeführt. Dabei kann gegebenenfalls gleichzeitig noch ein Formgebungsschritt, wie z.B. Sprayforming, Extrusion oder Tropfenbildung, durchgeführt werden.

Vor dem Waschen mit einem Diether der Formel I in Schritt b) kann das im Schritt a) vorgelegte silikatische Lyogel mit einem anderen Lösungsmittel als dem erfindungsgemäß verwendeten Diether gewaschen werden.

Als organische Lösungsmittel werden dabei im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind Ether. Unter Waschen bzw. Lösungsmitteltausch ist dabei nicht nur der einmalige Tausch des Lösungsmittels zu verstehen, sondern gegebenenfalls auch das mehrmalige Wiederholen mit unterschiedlichen Lösungsmitteln.

In Schritt b) wäscht man das in Schritt a) erhaltene Gel vorzugsweise solange mit einem Diether der Formel I, bis der Wassergehalt des Gels $\leq$ 5 Gew.-%, besonders bevorzugt $\leq$ 2 Gew.-% und insbesondere $\leq$ 1 Gew.-%, ist. Bevorzugt sind Diether der Formel I, bei denen $R^1$ und $R^2$ unabhängig voneinander, gleich oder verschieden Methyl- oder Ethylgruppen sind und n eine natürliche Zahl im Bereich von 2 bis 4 ist, wie z.B. Dimethoxyethan oder Diethoxyethan. Besonders bevorzugt als Diether der Formel I ist Dimethoxyethan (DME) ($R^1 = R^2 = CH_3$ und n = 2).

Bei Verwendung des besonders bevorzugten Lösungsmittels DME entsteht ein $DME/H_2O$-Gemisch, das auf einfache Weise mittels fester NaOH getrennt werden kann. Dazu wird soviel festes NaOH im $DME/H_2O$-Gemisch aufgelöst, bis das $H_2O$ vollständig in Form einer NaOH-Lösung als 2. Phase vorliegt. Die Zugabe der festen NaOH kann dabei nach allen dem Fachmann bekannten Methoden, wie z.B. Rühren, durchgeführt werden. Bevorzugt sind halbkontinuierliche oder kontinuierliche Verfahren.

Die Trennung der DME/NaOH (flüssig) Phasen kann ebenfalls nach allen dem Fachmann bekannten Methoden, wie z.B. Phasenscheider, durchgeführt werden. Bevorzugt sind hier ebenfalls halbkontinuierliche oder kontinuierliche Verfahren.

Das in Schritt b) erhaltene Lyogel kann einer weiteren Alterung unterzogen werden. Dies geschieht im allgemeinen zwischen 20°C und dem Siedepunkt des organischen Lösungsmittels. Gegebenenfalls kann auch unter Druck bei höheren Temperaturen gealtert werden. Die Zeit beträgt im allgemeinen 0,5 bis 48 Stunden, vorzugsweise 0,5 bis 24 Stunden. Nach einer solchen Alterung kann sich gegebenenfalls ein weiterer Lösungsmitteltausch zum gleichen oder einem anderen Lösungsmittel anschließen. Dieser zusätzliche Alterungsschritt kann gegebenenfalls auch nochmals wiederholt werden.

In Schritt c) wird das lösungsmittelhaltige Gel mit einem Silylierungsmittel umgesetzt. Als Silylierungsmittel werden im allgemeinen Silane der Formeln $R^1_{4-n}SiCl_n$ oder $R^1_{4-n}Si(OR^2)_n$ mit n = 1 bis 3 eingesetzt, wobei $R^1$ und $R^2$ unabhängig voneinander, gleich oder verschieden $C_1$-$C_6$-Alkyl, Cyclohexyl oder Phenyl sind. Auch Isopropenoxysilane sowie Silazane sind geeignet. Vorzugsweise verwendet man Trimethylchlorsilan. Darüber hinaus können alle dem Fachmann bekannten Silylierungsmittel eingesetzt werden, beispielsweise auch solche, wie sie in der DE-A-44 30 669 offenbart sind. Die Umsetzung wird im allgemeinen bei 20 bis 100°C, vorzugsweise 20 bis 70°C durchgeführt, wenn nötig in einem Lösungsmittel. Gegebenenfalls kann die Silylierung durch einen Katalysator, beispielsweise eine Säure oder Base, beschleunigt werden.

Vor Schritt d) wird das silylierte Gel vorzugsweise mit einem protischen oder aprotischen Lösungsmittel gewaschen, bis unumgesetztes Silylierungsmittel im wesentlichen entfernt ist (Restgehalt $\leq$ 0,2 Gew.-%). Geeignete Lösungsmittel sind im allgemeinen aliphatische Alkohole, Ether, Ester oder Ketone sowie aliphatische oder aromatische Kohlenwasserstoffe. Bevorzugte Lösungsmittel sind die in Schritt b) verwendeten.

In Schritt d) wird das silylierte, und vorzugsweise danach gewaschene Gel vorzugsweise unterkritisch, besonders bevorzugt bei Temperaturen von -30 bis 200°C, und insbesondere von 0 bis 100°C, getrocknet. Die bei der Trocknung angewandten Drücke liegen vorzugsweise bei 0,001 bis 20 bar, besonders bevorzugt bei 0,01 bis 5 bar.

Das in Schritt c) erhaltene Gel kann auch überkritisch getrocknet werden. Dies erfordert entsprechend dem jeweiligen Lösungsmittel höhere Temperaturen als 200°C und/oder höhere Drücke als 20 bar. Dies ist ohne weiteres möglich, aber es ist mit erhöhtem Aufwand verbunden und bringt keine wesentlichen Vorteile mit sich.

Die Trocknung wird im allgemeinen so lange fortgeführt, bis das Gel einen Lösungsmittel-Restgehalt von weniger als 0,1 Gew.-% aufweist.

In einer weiteren Ausführungsform kann das Gel je nach Anwendung vor der Oberflächenmodifizierung noch einer Netzwerkverstärkung unterworfen werden. Dies geschieht, indem man das erhaltene Gel mit einer Lösung eines zur Kondensation befähigten Alkyl- und/oder Arylorthosilikates der Formel $R^1_{4-n}Si(OR^2)_n$,

wobei n = 2 bis 4 ist und $R^1$ und $R^2$ unabhängig voneinander, gleich oder verschieden lineare oder verzweigte $C_1$-$C_6$-Alkyl-Reste, Cyclohexyl-Reste oder Phenyl-Reste sind, oder mit einer wäßrigen Kieselsäure-Lösung umsetzt. Diese Netzwerkverstärkung kann vor und/oder nach jedem durchgeführten Alterungsschritt bzw. Lösungsmitteltausch durchgeführt werden.

In einer weiteren Ausführungsform kann das Gel nach der formgebenden Polykondensation in Schritt a) und/oder jedem nachfolgenden Verfahrensschritt nach den dem Fachmann bekannten Techniken, wie z. B. Mahlen, zerkleinert werden.

Des weiteren können dem Sol vor der Gelherstellung Trübungsmittel als Zusatzstoffe, insbesondere IR-Trübungsmittel zur Reduktion des Strahlungsbeitrags zur Wärmeleitfähigkeit, wie z.B. Ruß, Titanoxid, Eisenoxide und/oder Zirkondioxid, zugesetzt werden.

Ebenfalls vor der Gelherstellung können dem Sol zur Erhöhung der mechanischen Stabilität Fasern zugesetzt werden. Als Fasermaterial können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

Das erfindungsgemäße Verfahren wird im folgenden anhand von Ausführungsbeispielen näher beschrieben, ohne dadurch beschränkt zu werden.

Beispiel 1

1 l einer Natriumwasserglaslösung (mit einem Gehalt von 7 Gew.-% $SiO_2$ und einem $Na_2O$:$SiO_2$ Verhältnis von 1:3,3) wird zusammen mit 0,5 l eines sauren lonenaustauscherharzes (Styrolvinylbenzolcopolymer mit Sulfonsäuregruppen, handelsüblich unter dem Namen ®Duolite C20) gerührt, bis der pH-Wert der wäßrigen Lösung 2,4 ist. Anschließend wird das lonenaustauscherharz abfiltriert und die wäßrige Lösung mit 1 molarer NaOH-Lösung auf einen pH-Wert von 4,7 eingestellt. Danach wird das entstandene Gel noch 3 Stunden bei 85°C gealtert und anschließend das Wasser mit 3 l Dimethoxyethan (DME) extrahiert. Anschließend wird das DME-haltige Gel mit Trimethylchlorsilan bei Raumtemperatur 5 Stunden silyliert (5 Gew.-% Trimethylchlorsilan pro Gramm nasses Gel). Nach Waschen des Gels mit 3 l DME erfolgt die Trocknung des Gels an Luft (3 Stunden bei 40°C, dann 2 Stunden bei 50°C und 12 Stunden bei 150°C). Das so erhaltene transparente Aerogel hat eine Dichte von 0,13 g/cm$^3$. Die spezifische Oberfläche nach BET liegt bei 500 m$^2$/g. Der λ-Wert liegt bei 0,015 W/mK.

Die Wärmeleitfähigkeit wurde mit einer Heizdrahtmethode (s. Z. B. O. Nielsson, G. Rüschenpöhler, J. Groß, J. Fricke, High Temperatures - High Pressures, Vol. 21, 267-274 (1989)) gemessen.

Beispiel 2

Die Darstellung des Aerogels erfolgt wie in Beispiel 1. Das DME/$H_2O$-Gemisch (4 l, 25 Vol.-% $H_2O$/75 Vol.-% DME) wird unter Rühren mit 1 kg festen NaOH-Plätzchen versetzt. Die dabei gebildete wäßrige Phase wird in einem Scheidetrichter von der DME-Phase getrennt. Die wäßrige Phase stellt eine 50 %ige NaOH-Lösung dar, die DME-Phase enthält noch 0,3 Gew.-% $H_2O$.

**Patentansprüche**

1. Verfahren zur Herstellung von Aerogelen mit dauerhaft hydrophoben Oberflächengruppen, bei dem man

    a) ein silikatisches Lyogel vorlegt,
    b) das in Schritt a) vorgelegte Gel mit einem organischen Lösungsmittel wäscht,
    c) das in Schritt b) erhaltene Gel oberflächensilyliert, und
    d) das in Schritt c) erhaltene oberflächensilylierte Gel trocknet,

    dadurch gekennzeichnet, daß man in Schritt b) als organisches Lösungsmittel einen Diether der Formel I verwendet,

    $$R^1\text{-O-}(CH_2)_n\text{-O-}R^2 \qquad (I)$$

    wobei

    $R^1$ und $R^2$ unabhängig voneinander, gleich oder verschieden Alkylgruppen mit 1 bis 4 C-Atomen sind und
    n eine natürliche Zahl im Bereich von 1 bis 5 ist.

2. Verfahren gemäß Anspruch 1, dadurch gekennzeichnet, daß man ein silikatisches Lyogel vorlegt, das durch Hydrolyse und Kondensation von Si-Alkoxiden in einem organischen Lösungsmittel mit Wasser erhältlich ist.

3. Verfahren gemäß Anspruch 1, dadurch gekennzeichnet, daß man ein silikatisches Lyogel vorlegt, das dadurch hergestellt wird, daß man eine wäßrige Wasserglaslösung mit Hilfe eines sauren lonenaustauscherharzes, einer Mineralsäure oder einer salzsauren Lösung auf einen pH-Wert ≤ 3 bringt, die dabei entstandene Kieselsäure durch Zugabe einer Base zu einem $SiO_2$-Gel polykondensiert und falls eine Mineralsäure benutzt wurde, das Gel mit Wasser im wesentlichen elektrolytfrei wäscht.

**4.** Verfahren gemäß mindestens einem der Ansprüche 1 bis 3, dadurch gekennzeichnet, daß man das in Schritt a) erhaltene SiO$_2$-Gel bevor man es wäscht bei 20 bis 100°C und einem pH-Wert von 4 bis 11 für eine Dauer von 1 Sekunde bis 48 Stunden altern läßt.

**5.** Verfahren gemäß mindestens einem der Ansprüche 1 bis 4, dadurch gekennzeichnet, daß man in Schritt b) als organisches Lösungsmittel einen Diether der Formel I verwendet, wobei R$^1$ und R$^2$ unabhängig voneinander, gleich oder verschieden Methyl- oder Ethylgruppen sind und n eine natürliche Zahl im Bereich von 2 bis 4 ist.

**6.** Verfahren gemäß Anspruch 5, dadurch gekennzeichnet, daß man als organisches Lösungsmittel Dimethoxyethan verwendet.

**7.** Verfahren gemäß mindestens einem der Ansprüche 1 bis 6, dadurch gekennzeichnet, daß man das Gel in Schritt b) solange wäscht, bis der Wassergehalt des Gels $\leq$ 5 Gew.-% ist.

**8.** Verfahren gemäß mindestens einem der Ansprüche 1 bis 7, dadurch gekennzeichnet, daß man in Schritt c) das Gel mit einem Silan der Formel R$^1_{4-n}$SiCl$_n$ oder R$^1_{4-n}$Si(OR$^2$)$_n$ mit n = 1 bis 3 umsetzt, wobei R$^1$ und R$^2$ unabhängig voneinander, gleich oder verschieden C$_1$-C$_6$-Alkyl, Cyclohexyl oder Phenyl sind.

**9.** Verfahren gemäß mindestens einem der Ansprüche 1 bis 8, dadurch gekennzeichnet, daß man das oberflächensilylierte Gel vor dem Schritt d) mit einem protischen oder aprotischen Lösungsmittel wäscht.

**10.** Verfahren gemäß mindestens einem der Ansprüche 1 bis 9, dadurch gekennzeichnet, daß man das oberflächensilylierte Gel unterkritisch trocknet.

**11.** Verfahren gemäß mindestens einem der Ansprüche 1 bis 10, dadurch gekennzeichnet, daß man das in Schritt b) erhaltene Gel vor der Silylierung mit einer Lösung eines zur Kondensation befähigten Alkyl- und/oder Arylorthosilikates der Form R$^1_{4-n}$Si(OR$^2$)$_n$ wobei n = 2 bis 4 ist und R$^1$ und R$^2$ unabhängig voneinander lineare oder verzweigte C$_1$-C$_6$-Alkyl-Reste, Cyclohexyl-Reste oder Phenyl-Reste sind, oder mit einer wäßrigen Kieselsäure-Lösung umsetzt.

**12.** Verfahren gemäß mindestens einem der vorhergehenden Ansprüche, dadurch gekennzeichnet, daß man dem Sol vor der Gelherstellung Zusatzstoffe und/oder Fasern zusetzt.

**Claims**

**1.** A method of producing aerogels having permanently hydrophobic surface groups, in which

a) a silicate lyogel is provided,
b) the gel provided in step a) is washed with an organic solvent,
c) the gel obtained in step b) is surface-silylated, and
d) the surface-silylated gel obtained in c) is dried,

characterised in that in step b) the organic solvent used is a diether of Formula I,

$$R^1\text{-O-}(CH_2)_n\text{-O-}R^2 \qquad (I)$$

in which

R$^1$ and R$^2$, independently of each other, are the same or different alkyl groups with 1 to 4 C-atoms and
n is a natural number in the range from 1 to 5.

**2.** A method according to claim 1, characterised in that a silicate lyogel is provided which is obtainable by hydrolysis and condensation of Si-alkoxides in an organic solvent with water.

**3.** A method according to claim 1, characterised in that a silicate lyogel is provided which is produced in that an aqueous water glass solution is brought to a pH value $\leq$ 3 by means of an acid ion exchange resin, mineral acid or a hydrochloric acid solution, the silicic acid resulting being polycondensed by the addition of a base to produce an SiO$_2$ gel and, in the event of a mineral acid having been used, the gel is washed with water to make it substantially electrolyte-free.

**4.** A method according to at least one of claims 1 to 3, characterised in that the SiO$_2$ gel obtained in step a), before being washed at 20 to 100°C and a pH value of 4 to 11, is allowed to age for a period of 1 second to 48 hours.

**5.** A method according to at least one of claims 1 to 4, characterised in that, in step b), the organic solvent used is a diether of Formula I whereby R$^1$ and R$^2$, independently of each other, are the same or different methyl or ethyl groups and n is a natural number in the range from 2 to 4.

**6.** A method according to claim 5, characterised in that dimethoxyethane is used as the organic solvent.

**7.** A method according to at least one of claims 1 to 6, characterised in that the gel in step b) is washed until the water content of the gel is $\leq 5\%$ by weight.

**8.** A method according to at least one of claims 1 to 7, characterised in that, in step c), the gel is reacted with a silane of formula $R^1_{4-n}SiCl_n$ or $R^1_{4-n}Si(OR^2)_n$ in which n = 1 to 3, $R^1$ and $R^2$ independently of each other being the same or different $C_1$ to $C_6$-alkyl, cyclohexyl or phenyl.

**9.** A method according to at least one of claims 1 to 8, characterised in that prior to step d) the surface-silylated gel is washed with a protic or aprotic solvent.

**10.** A method according to at least one of claims 1 to 9, characterised in that the surface-silylated gel is subcritically dried.

**11.** A method according to at least one of claims 1 to 10, characterised in that prior to silylation, the gel obtained in step b) is reacted with a solution of an alkyl and/or aryl orthosilicate of formula $R^1_{4-n}Si(OR^2)_n$ which is capable of condensation and in which n = 2 to 4 and $R_1$ and $R_2$ are, independently of each other, linear or branched $C_1$ to $C_6$ alkyl radicals, cyclohexyl radicals or phenyl radicals or with an aqueous solution of silicic acid.

**12.** A method according to at least one of the preceding claims, characterised in that additives and/or fibres are added to the sol prior to gel production.

**Revendications**

**1.** Procédé de préparation d'aérogels munis de groupes de surface hydrophobes durables, dans lequel

    a) un emploie un lyogel silicaté,
    b) on lave le gel employé à l'étape a) avec un solvant organique,
    c) on réalise une silylation superficielle du gel obtenu à l'étape b),
    d) on sèche le gel obtenu à l'étape c) silylé sur la surface ,

caractérisé en ce qu'on emploie à l'étape b), en tant que solvant organique, un diéther organique de formule I

$$R^1\text{-O-}(CH_2)_n\text{-O-}R^2 \qquad (I)$$

où

$R^1$ et $R^2$, identiques ou différents, représentent indépendamment l'un de l'autre des groupes alkyle présentant 1 à 4 atomes de carbone et n est nombre naturel dans le domaine de 1 à 5.

**2.** Procédé selon la revendication 1, caractérisé en ce qu'on emploie un lyogel silicaté que l'on obtient par hydrolyse et condensation d'alkoxyde de Si dans un solvant organique avec de l'eau.

**3.** Procédé selon la revendication 1, caractérisé en ce qu'on emploie un lyogel silicaté que l'on prépare en ce qu'on établit un pH $\leq 3$ dans une solution aqueuse de verre soluble à l'aide d'une résine échangeuse d'ions acide, d'un acide minéral ou d'une solution acide par l'acide chlorhydrique, on réalise une polycondensation de l'acide silicique produit alors par ajout d'une base pour obtenir un gel de $SiO_2$ et, dans le cas où on emploie un acide minéral, on lave le gel à l'eau pour le débarrasser essentiellement des électrolytes.

**4.** Procédé selon au moins l'une des revendications 1 à 3, caractérisé en ce que, avant lavage, on soumet à un vieillissement le gel de $SiO_2$ obtenu à l'étape a) à une température de 20 à 100°C et une valeur de pH de 4 à 11 pendant une durée de 1 seconde à 48 heures.

**5.** Procédé selon l'une des revendications 1 à 4, caractérisé en ce qu'on emploie à l'étape b), en tant que solvant organique, un diéther de formule I, où $R^1$ et $R^2$, identiques ou différents, représentent indépendamment l'un de l'autre des groupes méthyle ou éthyle et n est un nombre entier dans le domaine de 2 à 4.

**6.** Procédé selon la revendication 5, caractérisé en ce qu'on emploie le diméthoxyéthane en tant que solvant organique.

**7.** Procédé selon au moins l'une des revendications 1 à 6, caractérisé en ce qu'on lave le gel à l'étape b) jusqu'à ce que le gel présente une teneur en eau $\leq 5\%$ massiques.

**8.** Procédé selon au moins l'une des revendications 1 à 7, caractérisé en ce qu'on fait réagir le gel à l'étape c) avec un silane de formule $R^1_{4-n}SiCl_n$ ou $R^1_{4-n}Si(OR^2)_n$ où n = 1 à 3, où $R^1$ et $R^2$ identiques ou différents, représentent indépendamment l'un de l'autre des groupes alkyle en $C_1$-$C_6$, cyclohexyle ou phényle.

**9.** Procédé selon au moins l'une des revendications 1 à 8, caractérisé en ce que, avant l'étape d), on lave le gel silylé sur la surface par un solvant protique ou aprotique.

**10.** Procédé selon au moins l'une des revendications 1 à 9, caractérisé en ce qu'on sèche le gel silylé sur la surface dans des conditions sub-critiques.

**11.** Procédé selon au moins l'une des revendications 1 à 10, caractérisé en ce qu'on fait réagir le gel obtenu à l'étape b), avant la silylation, avec une solution d'un orthosilicate d'alkyle ou d'aryle de formule $R^1_{4-n}Si(OR^2)_n$ où n = 2 à 4 et $R^1$ et $R^2$ identiques ou différents, représentent indépendamment l'un de l'autre des restes alkyle en $C_1$-$C_6$, restes cyclohexyle ou restes phényle, ou réagir avec une solution aqueuse d'acide silicique.

**12.** Procédé selon au moins l'une des revendications précédentes, caractérisé en ce qu'on ajoute au sol, avant la préparation du gel, des matières d'addition et/ou des fibres.